# FASCICULE DE BREVET EUROPEEN

(11) **EP 2 859 129 B1**
(45) Date de publication et mention de la délivrance du brevet: **24.10.2018**
(21) Numéro de dépôt: 13727380.1
(22) Date de dépôt: 25.04.2013
(51) Int. Cl.: C23C 2/06, C23C 2/26, C23C 22/06, B32B 15/08

(54) **PROCÉDÉ DE RÉALISATION D'UNE TÔLE À REVÊTEMENTS ZnAlMg COMPRENANT L'APPLICATION D'UNE SOLUTION ACIDE ET D'UN ADHÉSIF, TÔLE ET ASSEMBLAGE CORRESPONDANTS**
VERFAHREN ZUM HERSTELLEN EINES ZNALMG-BESCHICHTETEN BLECHS, DAS DAS AUFTRAGEN EINER SÄURELÖSUNG UMFASST UND ENTSPRECHENDES BLECH
METHOD FOR MANUFACTURING A ZNALMG COATED SHEET COMPRISING THE APPLICATION OF AN ACID SOLUTION AND CORRESPONDING SHEET

(30) Priorité: 25.04.2012 WO PCT/FR2012/050913
(43) Date de publication de la demande: 15.04.2015
(73) Titulaire: ArcelorMittal, 1160 Luxembourg (LU)
(72) Inventeur: RICHARD, Joëlle, 60500 Chantilly (FR); JACQUESON, Eric, 57050 Longeville Les Metz (FR); LHERMEROULT, Audrey, 57000 Metz (FR); FELTIN, Pascale, 57850 Saint Privat La Montagne (FR); LEMAIRE, Jean-Michel, 60870 Villers Saint Paul (FR)
(74) Mandataire: Lavoix
(86) Numéro de dépôt international: PCT/IB2013/053280
(87) Numéro de publication internationale: WO 2013/160867

(56) Documents cités:
- EP-A1- 2 341 164
- JP-A- 2007 131 906
- US-A- 4 663 245
- US-A1- 2011 008 644

## Description

La présente invention est relative à une tôle comprenant un substrat en acier présentant deux faces revêtues chacune par un revêtement métallique comprenant du zinc, du magnésium et de l'aluminium.

De telles tôles sont plus particulièrement destinées à la fabrication de pièces pour l'industrie automobile, sans pour autant y être limitées.

Les revêtements métalliques comprenant essentiellement du zinc et de l'aluminium en faible proportion (typiquement de l'ordre de 0,1% en poids) sont traditionnellement utilisés pour leur bonne protection contre la corrosion. Ces revêtements métalliques sont à présent concurrencés notamment par les revêtements comprenant du zinc, du magnésium et de l'aluminium.

De tels revêtements métalliques seront globalement désignés ici sous le terme de revêtements zinc- aluminium- magnésium ou ZnAIMg.

US 2011/008644 divulgue un procédé de préparation de tôles à revêtements ZnAlMg et l'assemblage avec une deuxième tôle moyennant un adhésif.

L'ajout de magnésium augmente nettement la résistance à la corrosion de ces revêtements, ce qui peut permettre de réduire leur épaisseur ou d'augmenter la garantie de protection contre la corrosion dans le temps.

Dans l'industrie automobile notamment, les tôles sont fréquemment assemblées au moyen d'adhésifs pour la réalisation de certaines parties des véhicules, telles que, par exemple, des seuils de porte.

Les adhésifs de l'invention sont choisis parmi les adhésifs structuraux, structuraux renforcés (par exemple de type « crash ») ou semi-structuraux, des mastics d'étanchéité ou encore des mastics de calage qui sont de natures chimiques variées, telles que époxy, polyuréthane ou caoutchouc.

Dans l'industrie automobile, l'association d'une tôle avec un adhésif est habituellement évaluée au moyen d'un test de traction sur une éprouvette formée de deux languettes de la tôle, ces languettes étant collées sur une partie de leur surface par l'adhésif.

A cette occasion, on évalue d'une part l'adhérence de l'adhésif sur la tôle par la mesure de la contrainte de traction à la rupture et d'autre part la compatibilité de l'adhésif et de la tôle par détermination visuelle de la nature de la rupture.

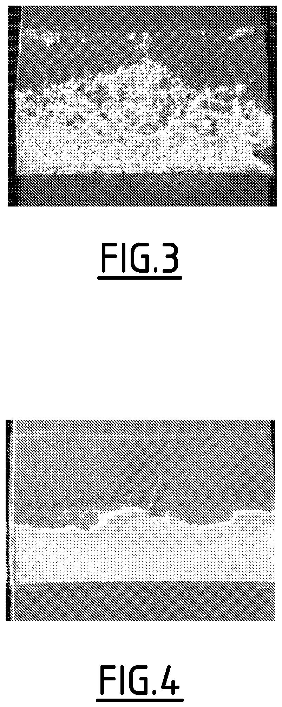

On peut à cette occasion observer principalement trois types, ou faciès, de rupture :
- la rupture cohésive, lorsque la rupture a lieu dans l'épaisseur de l'adhésif,
- la rupture adhésive (fig. 4), lorsque la rupture a lieu à une des interfaces entre les languettes et l'adhésif,
- la rupture cohésive superficielle (fig. 3), lorsque la rupture a lieu dans l'adhésif au voisinage d'une interface entre les languettes et l'adhésif.

Dans l'industrie automobile, on cherche à éviter les ruptures adhésives qui traduisent une mauvaise compatibilité de l'adhésif avec la tôle.

Or, les tests de traction font apparaître des ruptures très majoritairement adhésives lors de l'utilisation de certains adhésifs habituels pour l'industrie automobile sur les tôles à revêtements ZnAIMg. On peut ainsi observer jusqu'à 100% de rupture adhésive avec les revêtements ZnAIMg et certains adhésifs.

De telles proportions de rupture adhésive ne sont pas acceptables pour les constructeurs automobiles, ce qui pourrait limiter l'usage de ces nouveaux revêtements ZnAIMg pour certaines applications.

Un but de l'invention est de donc de proposer un procédé de réalisation d'une tôle à revêtements ZnAIMg qui présente une meilleure compatibilité avec les adhésifs et limite donc les risques de rupture adhésive.

A cet effet, l'invention a pour premier objet un procédé selon la revendication 1.

Le procédé peut également comprendre les caractéristiques des revendications 2 à 14, prises isolément ou en combinaison.

L'invention a également pour objet une tôle selon la revendication 15.

L'invention va à présent être illustrée par des exemples donnés à titre indicatif, et non limitatif, et en référence aux figures annexées sur lesquelles :
- la figure 1 est une vue schématique en coupe illustrant la structure d'une tôle obtenue par un procédé selon l'invention, et
- la figure 2 est un vue schématique illustrant une éprouvette utilisée pour un test de traction ;
- les figures 3 et 4 sont des clichés montrant respectivement une rupture cohésive superficielle et une rupture adhésive.

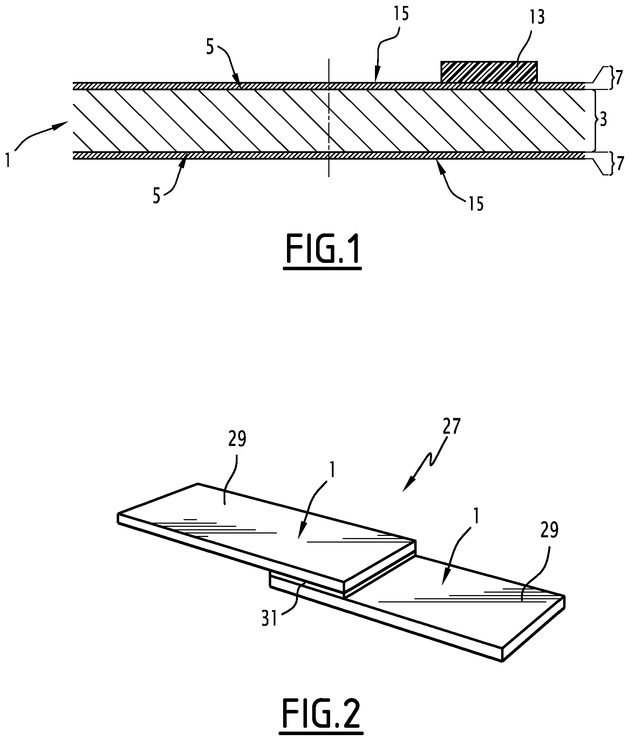

La tôle 1 de la figure 1 comprend un substrat 3 en acier recouvert sur chacune de ses deux faces 5 par un revêtement métallique 7.

On observera que les épaisseurs relatives du substrat 3 et des revêtements 7 le recouvrant n'ont pas été respectées sur la figure 1 afin de faciliter la représentation.

Les revêtements 7 présents sur les deux faces 5 sont analogues et un seul sera décrit en détail par la suite.

Le revêtement 7 présente généralement une épaisseur inférieure ou égale à 25 µm et vise de manière classique à protéger le substrat 3 contre la corrosion.

Le revêtement 7 comprend du zinc, de l'aluminium et du magnésium. Le revêtement 7 comprend entre 0,1 et 10% en poids de magnésium et entre 0,7 et 6% en poids d'aluminium.

De préférence, le revêtement 7 comprend plus de 0,3% en poids de magnésium voire entre 0,3% et 4% en poids de magnésium et/ou entre 1 et 6% en poids d'aluminium.

De préférence, le rapport massique Mg/AI entre le magnésium et l'aluminium dans le revêtement 7 est inférieur ou égal à 1, voire strictement inférieur à 1, voire strictement inférieur à 0,9.

Pour réaliser la tôle 1, on peut par exemple procéder comme suit.

On utilise un substrat 3 obtenu par exemple par laminage à chaud puis à froid. Le substrat 3 est sous forme d'une bande que l'on fait défiler dans un bain pour déposer les revêtements 7 par trempé à chaud.

Le bain est un bain de zinc fondu contenant du magnésium et de l'aluminium. Le bain peut également contenir jusqu'à 0,3% en poids de chacun des éléments optionnels d'addition tels que Si, Sb, Pb, Ti, Ca, Mn, Sn, La, Ce, Cr, Ni, Zr ou Bi.

Ces différents éléments peuvent permettre, entre autres, d'améliorer la ductilité ou l'adhésion des revêtements 7 sur le substrat 3. L'homme du métier qui connaît leurs effets sur les caractéristiques des revêtements 7 saura les employer en fonction du but complémentaire recherché. Le bain peut enfin contenir des éléments résiduels provenant des lingots d'alimentation ou résultant du passage du substrat 3 dans le bain, tels que du fer à une teneur allant jusqu'à 5% en poids et généralement comprise entre 2 et 4% en poids.

Après dépôt des revêtements 7, le substrat 3 est par exemple essoré au moyen de buses projetant un gaz de part et d'autre du substrat 3. On laisse ensuite refroidir les revêtements 7 de façon contrôlée.

La bande ainsi traitée peut ensuite être soumise à une étape dite de skin-pass qui permet de l'écrouir de sorte à effacer le palier d'élasticité, à fixer les caractéristiques mécaniques et à lui conférer une rugosité adaptée aux opérations ultérieures que la tôle doit subir.

Le moyen de réglage de l'opération de skin-pass est le taux d'allongement qui doit être suffisant pour atteindre les objectifs et minimum pour conserver la capacité de déformation ultérieure. Le taux d'allongement est habituellement compris entre 0,3 à 3%, et préférence entre 0,3 et 2,2%.

La tôle 1 ainsi obtenue peut être bobinée avant d'être découpée et éventuellement mise en forme. Elle est en suite assemblée avec d'autres tôles 1 par des utilisateurs.

Elle peut, de manière classique, être huilée à des fins de protection temporaire.

Comme illustré schématiquement sur la figure 1, un adhésif 13 peut être appliqué localement sur une surface extérieure 15 d'un revêtement 7 pour permettre par exemple d'assembler la tôle 1 à une autre tôle et ainsi constituer une partie de véhicule automobile. L'adhésif 13 peut être tout type de colle ou de mastic utilisé de manière classique dans l'industrie automobile.

Selon l'invention, le procédé de réalisation de la tôle 1 comprend une étape d'application d'une solution acide sur les surfaces extérieures 15 des revêtements métalliques 7, avant éventuelle application ultérieure d'un adhésif 13.

La solution acide a par exemple un pH compris entre 1 et 4, de préférence entre 1 et 3,5, de préférence entre 1 et 3, et de préférence encore entre 1 et 2. Cette solution peut comprendre par exemple de l'acide chlorhydrique, de l'acide sulfurique ou de l'acide phosphorique.

La durée d'application de la solution acide peut être comprise entre 0,2s et 30s, et de préférence entre 0,2s et 15s, et de préférence encore entre 0,5s et 15s en fonction du pH de la solution, du moment et de la manière où elle est appliquée.

Cette solution peut être appliquée sur la ligne de réalisation des revêtements 7 ou ultérieurement, par exemple, après que la tôle a été bobinée en sortie de la ligne de dépôt des revêtements 7.

Cette solution peut être appliquée par immersion, aspersion ou tout autre système. La température de la solution peut par exemple être la température ambiante et des étapes ultérieures de rinçage et de séchage peuvent être utilisées.

On peut également utiliser, en plus de l'étape d'application d'une solution acide, une étape de dégraissage, par exemple par application d'une solution alcaline sur les surfaces extérieures 15, et/ou ou une étape de traitement de surface.

L'étape de dégraissage a pour but de nettoyer les surfaces extérieures 15 et donc d'enlever les traces de salissure organique, de particules métalliques et de poussière.

De préférence, cette étape ne modifie pas la nature chimique des surfaces extérieures 15 à l'exception de l'altération d'une éventuelle couche d'oxyde/hydroxyde d'aluminium de surface. Ainsi, la solution employée pour cette étape de dégraissage est non-oxydante. On ne forme donc pas d'oxyde de magnésium ou d'hydroxyde de magnésium sur les surfaces extérieures 15 lors de l'étape de dégraissage et plus généralement avant l'étape d'application de l'adhésif 13.

L'étape de traitement de surface permet de former sur les surfaces extérieures 15 des couches (non représentées) améliorant la résistance à la corrosion et/ou l'adhérence d'autres couches ultérieurement déposées sur les surfaces extérieures 15. Une telle étape de traitement de surface comprend l'application sur les surfaces extérieures 15 d'une solution de traitement de surface qui réagit avec les surfaces extérieures 15.pour former les dites couches.

Dans certaines variantes, la solution de traitement de surface est une solution de conversion et les couches formées sont des couches de conversion. De préférence, la solution de conversion ne contient pas de chrome. Il peut ainsi s'agir d'une solution à base d'acide hexafluorotitanique ou hexafluorozirconique.

Les éventuelles étapes de dégraissage et de traitement de surface peuvent classiquement comprendre d'autres sous-étapes classiques de rinçage, de séchage....

L'éventuelle étape de dégraissage intervient avant ou après l'étape d'application de la solution acide. L'éventuelle étape de dégraissage et l'étape d'application de la solution acide interviennent avant l'éventuelle étape de traitement de surface.

Dans une variante, l'étape d'application de la solution acide et l'étape de traitement de surface sont confondues.

Dans ce dernier cas, c'est la solution de traitement de surface employée qui est acide. Dans ce cas notamment, le pH peut être strictement supérieur à 3, notamment si la solution de traitement de surface est appliquée à une température supérieure à 30°C.

Afin d'illustrer l'invention, des tests de traction ont été réalisés et vont être décrits à titre d'exemple non limitatifs.

Comme illustré par la figure 2, chaque éprouvette 27 est préparée de la façon suivante. On découpe des languettes 29 dans la tôle 1 à évaluer. Ces languettes 29 ont des dimensions de 25 mm par 100 mm. On colle les languettes 29 par un joint 31 de l'adhésif BM1496V, qui est une colle dite « crash » à base d'époxy et commercialisée par la société Dow Automotive.

Cet adhésif a été sélectionné car c'est un des adhésifs conduisant le plus à des ruptures adhésives.

L'éprouvette 27 ainsi constituée est ensuite portée à 180°C et maintenue à cette dernière pendant 30 minutes.

L'essai de traction est ensuite réalisé à une température ambiante de 23°C en imposant une vitesse de traction de 10mm/min à une languette 29, parallèlement à celle-ci, tandis que l'autre languette 29 est fixée. L'essai est poursuivi jusqu'à la rupture de l'éprouvette 27.

A l'issue de l'essai, on note la contrainte maximale de traction et on évalue visuellement la nature de la rupture.

Les essais ont été réalisés avec une tôle 1 dont le substrat 3 est un acier IFHR 340 de 1 mm d'épaisseur recouvert de revêtements 7 comprenant 3,7% d'aluminium et 3% de magnésium, le reste étant constitué de zinc et des impuretés inhérentes au procédé. Ces revêtements présentent des épaisseurs d'environ 10 µm. La tôle 1 a également été préalablement huilée avec une huile Quaker 6130 et un grammage de 1 g/m².

Comme illustré par le tableau 1 ci-dessous, les tôles 1 qui ont subi un traitement avec une solution acide favorisent l'apparition de ruptures cohésives superficielles contrairement aux tôles de référence pour lesquelles seules des ruptures adhésives sont constatées.

Dans les essais menés, les tôles de référence n'ont été soumises à aucun traitement.

**Tableau 1**

| | Référence | Test 1 | Test 2 | Test 3 |
|---|---|---|---|---|
| Traitement appliqué : nature de l'acide, durée de l'application, pH de la solution | | HCl | HCl | HCl |
| | | t= 15s | t=30s | t=30s |
| | | pH=1 | pH=1 | pH=2 |
| Contrainte de traction à la rupture (en MPa) | 19.3±0,4 | 22,0±0,39 | 21,1±0,1 | 20,9±0,5 |
| Types de rupture | 100% RA | 45% RCS 55% RA | 35% RCS 65% RA | 25% RCS 75% RA |

Des résultats analogues ont été obtenus après vieillissement des éprouvettes en environnement corrosif, avec d'autres acides, d'autres revêtements 7 ainsi que d'autres adhésifs.

Le tableau 2 ci-dessous rassemble des résultats obtenus avec des solutions de traitement de surface sur les mêmes tôles que celles utilisées pour les essais rapportés dans le tableau 1. Ainsi, une solution d'aminopropylsiloxane (y-APS) et différentes solutions de glycidoxypropylsiloxane (y-GPS) à des pH ajustés dans une gamme acide ont été appliquées au spin-coater et testées. Le temps d'hydrolyse indiqué est celui correspondant à la préparation de la solution de traitement de surface.

Comme on peut le constater à la lecture du tableau 2, l'utilisation de solutions acides de traitement de surface permet d'améliorer les faciès de rupture.

**Tableau 2**

| Solution de traitement de surface | Concentration (% en poids) | pH | Temps d'hydrolyse | Types de rupture |
|---|---|---|---|---|
| 3-aminopropyltrimethoxysilane | 0,1% | Non-ajusté (∼10) | 18h | 100% RA |
| (3-glycidoxypropyl)triethoxysilane | 0,1% | 3 | 18h | 55% RA et 45 % RCS |
| (3-glycidoxypropyl)trimethoxysilane | 0,1% | 3 | 1h | 50% RA et 50 % RCS |
| (3-glycidoxypropyl)trimethoxysilane | 0,5% | 3 | 1h | 50% RA et 50 % RCS |
| (3-glycidoxypropyl)methyldiethoxysilane | 0,1% | 2 | 1h | 40% RA et 60 % RCS |

## Revendications

1. Procédé de réalisation d'une tôle (1), le procédé comprenant au moins des étapes de :
- fourniture d'un substrat (3) en acier présentant deux faces (5) revêtues chacune par un revêtement métallique (7) obtenu par trempe du substrat (3) dans un bain et refroidissement, chaque revêtement métallique (7) comprenant du zinc, entre 0,7 et 6% en poids d'aluminium et entre 0,1 et 10% en poids de magnésium, puis
- application d'une solution acide de pH compris entre 1 et 4 sur les surfaces extérieures (15) des revêtements métalliques (7), puis
- application d'un adhésif (13) choisi parmi les adhésifs structuraux, structuraux renforcés ou semi-structuraux, les mastics d'étanchéité et les mastics de calage localement sur au moins une surface extérieure (15) d'un revêtement métallique (7), puis
- assemblage avec une deuxième tôle par l'intermédiaire de l'adhésif (13).

2. Procédé selon la revendication 1, dans lequel les revêtements métalliques (7) comprennent entre 0,3 et 10% en poids de magnésium.

3. Procédé selon la revendication 2, dans lequel les revêtements métalliques (7) comprennent entre 0,3 et 4% en poids de magnésium.

4. Procédé selon l'une quelconque des revendications 1 à 3, dans lequel les revêtements métalliques (7) comprennent entre 1 et 6% en poids d'aluminium.

5. Procédé selon l'une des revendications précédentes, dans lequel le rapport massique entre le magnésium et l'aluminium dans les revêtements métalliques (7) est strictement inférieur ou égal à 1, de préférence strictement inférieur à 1, et de préférence encore strictement inférieur à 0,9.

6. Procédé selon l'une des revendications précédentes, dans lequel la solution acide est appliquée pendant une durée comprise entre 0,2s et 30s sur les surfaces extérieures (15) des revêtements métalliques (7).

7. Procédé selon la revendication 6, dans lequel la solution acide est appliquée pendant une durée comprise entre 0,2s et 15s, de préférence entre 0,5 et 15s, sur les surfaces extérieures (15) des revêtements métalliques (7).

8. Procédé selon l'une des revendications précédentes, dans lequel la solution acide est une solution de traitement de surface pour former sur les surfaces extérieures (15) des couches améliorant la résistance à la corrosion et/ou l'adhérence.

9. Procédé selon l'une des revendications 1 à 7, le procédé comprenant en outre, avant l'étape d'application de l'adhésif (13), une étape de traitement de surface par application d'une solution de traitement de surface sur les surfaces extérieures (15) des revêtements métalliques (7) pour former sur les surfaces extérieures (15) des couches améliorant la résistance à la corrosion et/ou l'adhérence.

10. Procédé selon la revendication 8 ou 9, dans lequel la solution de traitement de surface est une solution de conversion.

11. Procédé selon l'une des revendications précédentes, le procédé comprenant en outre, avant l'étape d'application de l'adhésif (13), une étape de dégraissage par application d'une solution alcaline sur les surfaces extérieures (15) des revêtements métalliques (7).

12. Procédé selon l'une des revendications précédentes, dans lequel la solution acide a un pH compris entre 1 et 3,5.

13. Procédé selon la revendication 12, dans lequel la solution acide a un pH compris entre 1 et 3.

14. Procédé selon la revendication 13, dans lequel la solution acide a un pH compris entre 1 et 2.

15. Tôle (1) comprenant un substrat (3) en acier présentant deux faces (5) revêtues chacune par un revêtement métallique (7) comprenant du zinc, entre 0,7 et 6% en poids d'aluminium et entre 0,1 et 10% en poids de magnésium, ladite tôle (1) étant assemblée, par l'intermédiaire d'un adhésif (13) choisi parmi les des adhésifs structuraux, structuraux renforcés ou semi-structuraux, les mastics d'étanchéité et les mastics de calage, avec une deuxième tôle, et ladite tôle (1) étant réalisée par un procédé selon l'une des revendications précédentes.

## Patentansprüche

1. Verfahren zum Herstellen eines Blechs (1), wobei das Verfahren wenigstens die folgenden Schritte umfasst:
- Bereitstellen eines Substrats (3) aus Stahl, das zwei Flächen (5) aufweist, die jeweils mit einer metallischen Beschichtung (7) beschichtet sind, die durch Abschreckhärtung des Substrats (3) in einem Bad und Abkühlung erhalten wird, wobei jede metallische Beschichtung (7) Zink, Aluminium im Bereich von 0,7 bis 6 Gew.-% und Magnesium im Bereich von 0,1 bis 10 Gew.-% enthält, dann
- Aufbringen einer sauren Lösung mit einem pH-Wert im Bereich von 1 bis 4 auf die äußeren Oberflächen (15) der metallischen Beschichtungen (7), dann
- Aufbringen eines Klebstoffs (13), der aus Klebstoffen mit Struktur, Klebstoffen mit verstärkter Struktur oder Klebstoffen mit Halbstruktur, Dichtungskitten und Verkeilungskitten gewählt ist, räumlich begrenzt auf wenigstens eine äußere Oberfläche (15) einer metallischen Beschichtung (7), dann
- Zusammenfügen mit einem zweiten Blech mit dem Klebstoff (13) als Zwischenmedium.

2. Verfahren nach Anspruch 1, wobei die metallischen Beschichtungen (7) Magnesium im Bereich von 0,3 bis 10 Gew.-% enthalten.

3. Verfahren nach Anspruch 2, wobei die metallischen Beschichtungen (7) Magnesium im Bereich von 0,3 bis 4 Gew.-% enthalten.

4. Verfahren nach einem der Ansprüche 1 bis 3, wobei die metallischen Beschichtungen (7) Aluminium im Bereich von 1 bis 6 Gew.-% enthalten.

5. Verfahren nach einem der vorhergehenden Ansprüche, wobei das Massenverhältnis zwischen Magnesium und Aluminium in den metallischen Beschichtungen (7) streng kleiner oder gleich 1, vorzugsweise streng kleiner als 1 und stärker bevorzugt streng kleiner als 0,9 ist.

6. Verfahren nach einem der vorhergehenden Ansprüche, wobei die saure Lösung während einer Dauer im Bereich von 0,2 s bis 30 s auf die äußeren Oberflächen (15) der metallischen Beschichtung (7) aufgebracht wird.

7. Verfahren nach Anspruch 6, wobei die saure Lösung während einer Dauer im Bereich von 0,2 s bis 15 s und vorzugsweise im Bereich von 0,5 bis 15 s auf die äußeren Oberflächen (15) der metallischen Beschichtung (7) aufgebracht wird.

8. Verfahren nach einem der vorhergehenden Ansprüche, wobei die saure Lösung eine Oberflächenbehandlungslösung ist, um auf den äußeren Oberflächen (15) Schichten zu bilden, die den Widerstand gegenüber Korrosion und/oder die Haftung verbessern.

9. Verfahren nach einem der Ansprüche 1 bis 7, wobei das Verfahren außerdem vor dem Schritt des Aufbringens des Klebstoffs (13) einen Oberflächenbehandlungsschritt durch Aufbringen einer Oberflächenbehandlungslösung auf die äußeren Oberflächen (15) der metallischen Beschichtungen (7) umfasst, um auf den äußeren Oberflächen (15) Schichten zu bilden, die den Widerstand gegenüber Korrosion und/oder die Haftung verbessern.

10. Verfahren nach Anspruch 8 oder 9, wobei die Oberflächenbehandlungslösung eine Umwandlungslösung ist.

11. Verfahren nach einem der vorhergehenden Ansprüche, wobei das Verfahren außerdem vor dem Schritt des Aufbringens des Klebstoffs (13) einen Schritt des Entfettens durch Aufbringen einer alkalischen Lösung auf die äußeren Oberflächen (15) der metallischen Beschichtungen (7) umfasst.

12. Verfahren nach einem der vorhergehenden Ansprüche, wobei die saure Lösung einen pH-Wert im Bereich von 1 bis 3,5 besitzt.

13. Verfahren nach Anspruch 12, wobei die saure Lösung einen pH-Wert im Bereich von 1 bis 3 besitzt.

14. Verfahren nach Anspruch 13, wobei die saure Lösung einen pH-Wert im Bereich von 1 bis 2 besitzt.

15. Blech (1), das ein Substrat (3) aus Stahl umfasst, das zwei Flächen (5) aufweist, die jeweils mit einer metallischen Beschichtung (7) beschichtet sind, die Zink, Aluminium im Bereich von 0,7 und 6 Gew.-% und Magnesium im Bereich von 0,1 bis 10 Gew.-% enthält, wobei das Blech (1) über einen Klebstoff (13), der aus Klebstoffen mit Struktur, Klebstoffen mit verstärkter Struktur oder Klebstoffen mit Halbstruktur, Dichtungskitten und Verkeilungskitten gewählt ist, mit einem zweiten Blech zusammengefügt wird, wobei das Blech (1) durch ein Verfahren nach einem der vorhergehenden Ansprüche hergestellt wird.

## Claims

1. A method for producing a metal sheet (1), the method comprising at least the following steps:
- providing a steel substrate (3) having two faces (5) each coated with a metal coating (7) obtained by dipping the substrate (3) in a bath and cooling, each metal coating (7) comprising zinc, between 0.1 and 20 wt% of aluminum, and between 0.7 and 6 wt% of magnesium, then
- applying an acid solution with a pH comprised between 1 and 4 on the outer surfaces (15) of the metal coatings (7), then
- applying an adhesive (13) chosen among structural, reinforced structural or semi-structural adhesives, sealing putties or wedging putt locally on at least one outer surface (15) of a metal coating (7), then
- assembling with a second metal sheet via the adhesive (13).

2. The method according to claim 1, wherein the metal coatings (7) comprise between 0.3 and 10 wt% of magnesium.

3. The method according to claim 2, wherein the metal coatings (7) comprise between 0.3 and 4 wt% of magnesium.

4. The method according to any one of claims 1 to 3, wherein the metal coatings (7) comprise between 1 and 6 wt% of aluminum.

5. The method according to one of the preceding claims, wherein the weight ratio between the magnesium and the aluminum in the metal coatings (7) is strictly less than or equal to 1, preferably strictly less than 1, and preferably strictly less than 0.9.

6. The method according to one of the preceding claims, wherein the acid solution is applied during a duration comprised between 0.2 s and 30 s on the outer surfaces (15) of the metal coatings (7).

7. The method according to claim 6, wherein the acid solution is applied during a duration comprised between 0.2 s and 15 s, preferably between 0.5 s and 15 s, on the outer surfaces (15) of the metal coatings (7).

8. The method according to one of the preceding claims, wherein the acid solution is a surface treatment solution for forming layers improving the corrosion resistance and/or adherence on the outer surfaces (15).

9. The method according to one of claims 1 to 7, the method further comprising, before the step for applying the adhesive (13), a surface treatment step by applying a surface treatment solution on the outer surfaces (15) of the metal coatings (7) to form layers improving the corrosion resistance and/or adherence.

10. The method according to claim 8 or 9, wherein the surface treatment solution is a conversion solution.

11. The method according to one of the preceding claims, the method further comprising, before the step for applying the adhesive (13), a degreasing step by applying an alkaline solution on the outer surfaces (15) of the metal coatings (7).

12. The method according to one of the preceding claims, wherein the acid solution used has a pH comprised between 1 and 3.5.

13. The method according to claim 12, wherein the acid solution has a pH comprised between 1 and 3.

14. The method according to claim 13, wherein the acid solution has a pH comprised between 1 and 2.

15. A metal sheet (1) comprising a steel substrate (3 having two faces (5) each coated with a metal coating (7) comprising zinc, between 0.7 and 6 wt% of aluminum and between 0.1 and 10 wt% of magnesium, said sheet (1) being assembled via an adhesive (13) chosen among structural, reinforced structural or semi-structural adhesives, sealing putties or wedging putt, with a second metal sheet, said sheet being obtained by a method according to one of the preceding claims.
